# EUROPEAN PATENT SPECIFICATION

(11) **EP 3 356 706 B1**
(45) Date of publication and mention of the grant of the patent: **19.12.2018**
(21) Application number: 15771096.3
(22) Date of filing: 28.09.2015
(51) Int. Cl.: F16H 63/30, F16H 61/36

(54) **SHIFT TOWER FOR A PULL-PULL GEARSHIFT ASSEMBLY**
SCHALTDOM FÜR EINE ZUG-ZUG-GANGSCHALTANORDNUNG
TOUR DE CHANGEMENT DE VITESSES DESTINÉ À UN ENSEMBLE DE CHANGEMENT DE VITESSES À TRACTION-TRACTION

(43) Date of publication of application: 08.08.2018
(73) Proprietor: Kongsberg Automotive AB, 565 28 Mullsjoe (SE)
(72) Inventor: AXELL, Jesper, S-54132 Skövde (SE)
(74) Representative: Uexküll & Stolberg
(86) International application number: PCT/EP2015/072233
(87) International publication number: WO 2017/054834

(56) References cited:
- DE-A1- 19 544 837
- DE-A1- 19 952 157
- US-A1- 2012 118 094

## Description

The present invention relates to a shift tower for a pull-pull gearshift assembly for a gearbox comprising:
a shift shaft,
two shift cables,
two select cables,
a shift lever adapted to be connected to the shift shaft of the gearbox such that two shift lever portions extend in opposite directions from the shift shaft in a plane perpendicular to the longitudinal axis of the shift shaft, each shift lever portion including a cable connection at an end portion at a distance to the longitudinal axis of the shift shaft for connecting to one of the two shift cables,
a select lever including a pivot bearing adapted to be mounted at the gearbox in the vicinity of the shift shaft such that the pivot axis extends in a plane perpendicular to the longitudinal axis of the shift shaft, and such that an actuating arm connected to the select lever extends towards the shift shaft and into engagement with axial engagement surfaces for engagement with the shift shaft in axial direction thereof and for longitudinal displacement of the shift shaft, wherein the axial engagement surfaces are connected to the shift shaft, the select lever having two cable connections, each for connecting to one of the two select cables.
By axial engagement surfaces on the shift shaft, surfaces extending radially with respect to the longitudinal axis of the shift shaft are meant forming a leverage point for the actuating arm to effect shifting of the shift shaft in a longitudinal direction thereof. The axial engagement surfaces may for example be formed by opposite side walls of a recess in the shift shaft itself which recess receives a tip portion of the actuating arm, such that pivoting of the select lever is transferred by the actuating arm into a movement of the shift shaft in its longitudinal directions. Alternatively, the recesses can be formed in a component connected to the shift shaft, for example in a central, coaxial projection on the central axis of the shift lever mounted on the end of the shift shaft.

A traditional shifter assembly for a manual transmission of a vehicle typically comprises a shift lever which is displaceable in a shift direction (forwards and backwards from a rest position, the shift direction normally being parallel to the longitudinal direction and driving direction of the vehicle), and which is displaceable in a select direction between two or more shifting gates (the select direction being to the left and right, perpendicular to the longitudinal direction and driving direction of the vehicle).

In a traditional push-pull cable the movements of the shift lever and the cable transferring the control commands of the shift lever to a shift shaft of a gearbox the resulting movements are as follows:
movement of the shift lever forward results in pulling the shift cable;
movement of the shift lever backwards results in pushing the shift cable;
movement of the shift lever to the left results in pulling the select cable; and
movement of the shift lever to the right results in pushing the select cable.

The cables are in turn connected to a shift tower which translates the movement of the cables into a rotation of a shift shaft around its longitudinal axis (typically corresponding to a shift movement of the shift shaft) and into a longitudinal displacement of the shift shaft along its longitudinal axis (typically corresponding to a select movement of the shift shaft). The shift shaft is in turn selectively engageable with shift forks which engages/disengages the various gears of the transmission.

A problem associated with such traditional shifter assemblies is that the cables must be capable of transferring a pushing force. This implies high requirements on the structural rigidity of the cables. A cable, more particularly the inner cable core which is enveloped by a cable sleeve, has to be rather stiff such that it does not bend when pushing forces are transferred through the inner cable element.

It is also known in the field to utilize so called pull-pull gearshift assemblies, i.e. a shifter assembly that actuates the shift tower solely by pulling cables. This requires two cable portions for each of the select and the shift directions (the two cable portions needed for each direction can in fact belong to one cable which is routed around a pulley and connected thereto such that rotational movement of the pulley in forward and backward directions result in a pulling action of one of the two cable portions, respectively; alternatively two separate cable portions individually connected to the respective pulley can be used). However, due to the lower requirements on the structural rigidity, the cables needed in a pull-pull shifter assembly will still be cheaper than cables needed in traditional push-pull gearshift assemblies.

U.S. 2012/118,094 A1 discloses such a pull-pull shifter assembly according to the preamble of claim 1. The gearshift assembly has a shift lever which is mounted to be pivotable in a select direction between at least two shifting gate positions and, at each shifting gate position, from a neutral position in a shift direction perpendicular to the select direction. The shift lever is directly and fixedly connected to a shift pulley so that moving the shift lever forward or backward in shift direction directly rotates the shift pulley to make a corresponding rotational movement in forward or backward direction. Two shift cables are extending from the shift pulley so that rotating the shift pulley forward or backward one or the other, respectively, of the two shift cables is pulled. In fact the two shift cables can be part of one physical shift cable that is routed around and fixed to the shift pulley to transmit rotational movements thereof to corresponding displacements of the two shift cables to a shift tower. There is furthermore a select pulley with corresponding select cables to transmit rotations of the select pulley into corresponding displacements of the two select cables extending from the select pulley to the shift tower.

The two shift cables and the two select cables extend to the shift tower at a gearbox. The shift tower comprises a shift lever adapted to be connected to a shift shaft of the gearbox projecting therefrom. When connected to the shift shaft two shift lever portions extend in opposite directions in a plane perpendicular to the longitudinal axis of the shift shaft. Each shift lever portion comprises a cable connection at an end portion at a distance to the longitudinal axis of the shift shaft for connecting to one of the two shift cables. If one of the two shift cables is pulled a torque is exerted on the shift shaft by the shift lever portion which is pulled by the shift cable. In this manner pulling one or the other of the two shift cables the shift shaft is rotated about its longitudinal axes in one or the other direction.

A select lever extends generally perpendicular to the shift lever and parallel to the longitudinal axis of the shift shaft. The select lever comprises a pivot bearing adapted to be mounted at the gearbox in the vicinity of the shift shaft such that the pivot axis of the select lever extends in a plane perpendicular to the longitudinal axes of the shift shaft. An actuating arm projects from the centre of the select lever and perpendicular thereto and extends towards the shift shaft and into a recess in the shift shaft. The select lever has two opposite cable connections close to its opposite ends, each for connecting to one of the two select cables. In this manner pulling one of the two select cables results a pivotal movement of the select lever in one direction which, by transmission of the actuating arm, causes a longitudinal displacement of the shift shaft along its longitudinal axis in one direction, whereas pulling the other of the two select cables pivots the select lever in the opposite direction which results in a longitudinal displacement of the shift shaft in the opposite direction.

Due to the arrangement of the shift and select levers in a generally perpendicular relationship (the two levers form a cross) the shift tower is space consuming. In particular, the shift shaft has to project from the surface of the gearbox housing with a length that is higher than half of the length of the select lever since the select lever is mounted in its pivot bearing to the gearbox and extends, in its rest position, parallel to the longitudinal axis of the shift shaft and perpendicular to the surface of the housing of the gearbox.

It is an object of the present invention to provide a shift tower for a pull-pull gearshift assembly which is less space consuming when mounted at the gearbox and coupled to the shift shaft. In addition the shift tower should allow that the length of the portion of the shift shaft projecting from the gearbox is reduced compared to current shift towers.

This object is achieved by a shift tower comprising the features of claim 1. Preferred embodiments of the invention are set out in the dependent claims.

According to the present invention there are two separate select levers and two pivot bearings, wherein each of the two separate select levers is mounted in one of these pivot bearings. The pivot bearings are adapted to be mounted diametrically opposite to each other with respect to the shift shaft, with the projecting shift shaft portion disposed in a central location in-between the two select levers. Each separate select lever has a cable connection spaced apart from its pivot bearing in the same direction with respect to the longitudinal axis of the shift shaft for connecting a respective one of the select cables. This spacing of the cable connections in the same direction with respect to the longitudinal axis of the shift shaft implies that both separate select levers are oriented in the same direction which, in the rest position of the select levers, is parallel to the longitudinal axis of the shift shaft. In other words, both separate select levers are essentially arranged in a point symmetrical or mirrored fashion with respect to the shift shaft in the center in-between. Each of the two separate select levers comprises such an actuating arm connected to the select lever to extend towards the shift shaft and into engagement with the axial engagement surfaces for engagement with the shift shaft in axial direction thereof and for longitudinal displacement of the shift shaft, wherein the axial engagement surfaces are connected to the shift shaft on opposite sides thereof. The axial engagement surfaces extend radially with respect to the longitudinal axis of the shift shaft. The two actuating arms engage their associated axial engagement surfaces on opposite sides with respect to the longitudinal axis, i.e. one actuating arm acts on the associated axial engagement surface from above, and the other from below. In this manner pulling one of the select cables pivots one of the separate select levers with its cable connection towards the shift shaft which is transmitted by the connected actuating arm acting on the axial engagement surface into a longitudinal displacement of the shift shaft in a first direction, and pulling the other select cable pivots the other of the two separate select levers with its cable connection away from the shift shaft which is transmitted by the connected actuating arm acting on the associated axial engagement surface arm into a longitudinal displacement of the shift shaft in a second direction opposite to the first direction.

While in the prior art one select lever with two opposing select lever portions extending from the pivot bearing in opposite direction with respect to the longitudinal axis of the shift shaft was used, the present invention utilizes two separated select levers arranged symmetrically and in a mirrored fashion with respect to the projecting shift shaft end in the center in between. Since both separate select levers are oriented in the same direction with respect to longitudinal axis of the shift shaft both select levers can be arranged to be directed away from gearbox. Accordingly, less space is needed for accommodating the two separate select levers compared to the prior art unitary select lever with two opposing select lever portions directed in opposite directions with respect to the longitudinal axes of the shift shaft, one directed towards the gearbox, one directed away from the gearbox. Consequently, the length of the portion of the shift shaft projecting over the surface of the gearbox can be reduced in the arrangement according to the present invention.

In a preferred embodiment the axial engagement surfaces are formed by opposite recesses in an outer wall of a component connected to the shift shaft. Each actuating arm extends into its associated recess. Each recess in fact has two radially extending surfaces, wherein only one is actually needed for the actuating arm to be able to exert a force in a respective one of the longitudinal directions.
In a preferred embodiment both separate select levers are identical components which are disposed symmetrically to a shift shaft centre point, i.e. point symmetric to a centre point on the longitudinal axis of the shift shaft. In this manner the two select levers act in a reverse manner on the shift shaft to either displace it in one direction along its longitudinal axis or in the opposite direction.
In a preferred embodiment the recesses connected to the shift shaft for receiving the actuating arms of the separate select levers are formed by a circumferential groove in the outer wall of the component coaxially projecting from the shift shaft. Such groove can also be formed by an outer end portion of the shift shaft being formed with reduced diameter and a disk of larger diameter than the reduced diameter portion which is fixed coaxially at the outer end of the reduced diameter portion of the shift shaft. The recesses for receiving the actuating arms of the shift lever anyhow have to have an extension in circumferential direction to allow shift movements of the shift shaft (rotational movements about its longitudinal axis), but by forming the recesses by providing a continuous circumferential groove the positioning of the recesses is no longer an issue. Furthermore, providing a circumferential recess compared to forming two recesses separated from each other is simpler from a manufacturing point of view.
In a preferred embodiment the separate select levers are oriented such that for each select lever a line connecting the pivot axis of the pivot bearing and the cable connection is, when the separate select levers are in rest position with none of the select cables being pulled, extending parallel to the longitudinal axis of the shift shaft.

In a preferred embodiment the pivot bearings are provided on a common base component of the shift tower which is provided with mounting openings, wherein the shift and select cables are provided with outer sleeves which are connected to end fittings, and with inner cores which are guided through the end fittings and are slidable therein, and the end fittings are mounted in the mounting openings of the base component to attach the outer sleeves of the select cables to the shift tower. The mounting openings for the cable end fittings in which the cable end fittings are mounted on the shift tower and at which the sleeves of the select cables are attached to the shift tower are located such that the angle between each select cable and the line connecting the pivot bearing and the cable connection of the associated select lever is less than 90°, preferably less than 85°. It has been found that with such arrangement the cable length that is reduced by pulling of one of the select cables is exceeded by the additional cable length added by the other of the select cables. This introduces slack in the select cable that is not being pulled and thus allows the select lever connected to the select cable not being pulled to freely follow the longitudinal displacement of the shift shaft effected by the other of the two select levers. In other words it is ensured that the passively following select lever connected to the select cable that is not being pulled does not impede the longitudinal displacement of the shift shaft caused by the other select lever which is pivoted by pulling the select cable connected to it.
In a preferred embodiment each of the cable connections of the separate select levers comprises a cylindrical opening at that end of the respective select lever that is remote from the pivot bearing to hold a complementary shaped cable end fitting fixed to the cable end of the associated one of the select cables.

The invention will now be described with reference to the drawings wherein Figs. 1 - 3 do not show embodiments of the invention:
Fig. 1 shows a schematical side view of a pull-pull shifter assembly which can be used in connection with the invention;
Fig. 2 shows a perspective schematical view of the pull-pull shifter assembly of Fig. 1;
Fig. 3 shows an exploded view of components of the pull-pull shifter assembly of Figs. 1 and 2;
Fig. 4 shows a perspective view of an embodiment of the shift tower according to the present invention;
Figs. 5 and 6 show schematic side views of the select lever arrangement of the shift tower according to the present invention with one of the select cables pulled and with the other of the select cables pulled, respectively;
Figs. 7a to 7c show schematical side views of the select lever arrangement of the shift tower according to the present invention with no select cable pulled, one of the select cables pulled, and with the other one of the select cables pulled, respectively, wherein the select cables are arranged such that they extend at a right angle with respect to the select levers when the select levers are in the rest position; and
Figs. 8a to 8c show schematic side views of the select lever arrangement of the shift tower according to the present invention in the same actuation states as in Fig. 7a to 7c, but with the select cables being inclined with respect to the select levers at an angle of less than 90° when the select lever is on the rest position.

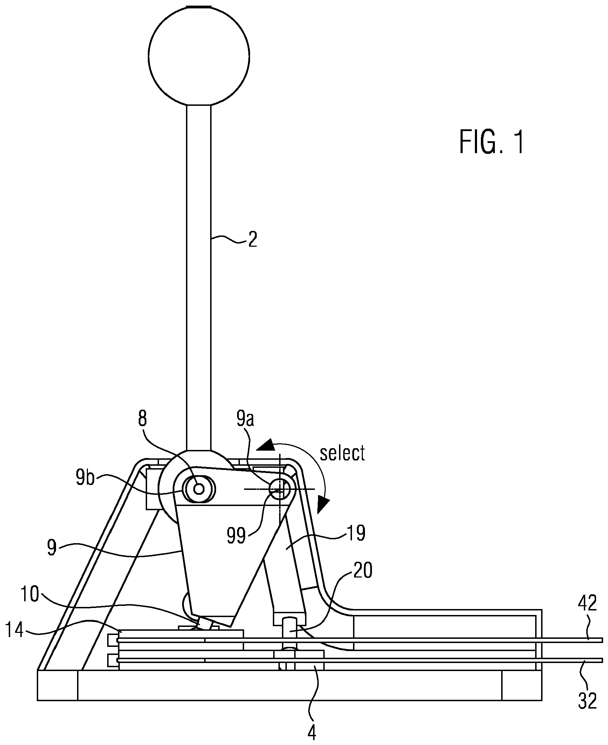

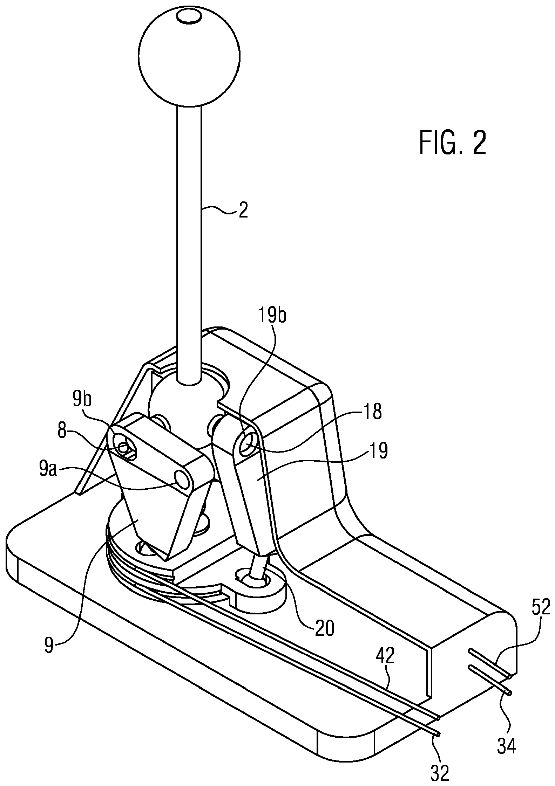

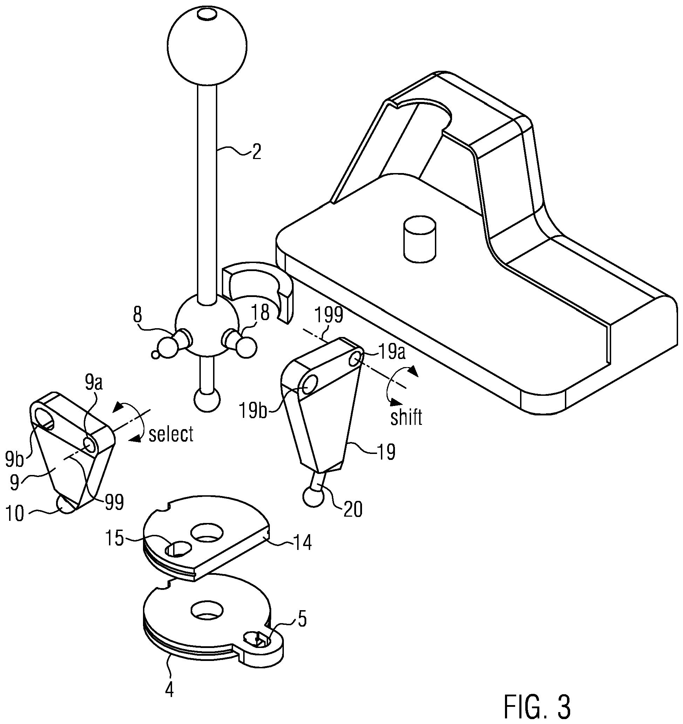

For a better understanding of the environment of the shift tower of the present invention further components of an example of a generally known pull-pull shifter assembly will now be described with reference to Figs. 1 to 3. The shifter assembly comprises a shift lever 2 which extends generally in vertical direction and which is mounted in a pivot bearing which allows to pivot the shift lever in shift direction (in the plane of Fig. 1) and in a select direction between shift gates in a direction perpendicular thereto. In general, the shift direction corresponds to the longitudinal and driving direction of a vehicle, and the select direction is perpendicular to the longitudinal axis of the vehicle.
It should be noted that in Figs. 1 to 3 the pivot bearing of the shift lever 2 in which a ball mounted on its lower end portion is received, is not shown in Figs. 1 and 2 and only partially shown in Fig. 3.
A shift pulley 4 and a select pulley 14 are coaxially mounted below the shift lever with their axes of rotation being oriented vertically. Around the shift pulley 4 a shift cable 32, 34 is routed which is received in a groove that is extending circumferentially around the shift pulley 4. The shift cable 32, 34 is further fixed to the shift pulley 4 such that any rotational movement is translated to a corresponding longitudinal displacement of the two shift cables extending from the shift pulley 4 (the two shift cables 32, 34 are in this embodiment are part of one physical cable but could also be two separate cables, each fixed to the periphery of the shift pulley). In a corresponding manner a select cable 42, 52 is routed around a select pulley 14 and is received in a groove formed in its circumference. The select cable 42, 52 is likewise fixed to the select pulley 14 such that rotational movements of the select pulley 14 are translated into corresponding longitudinal displacements of the two select cables extending from the select pulley 14, i.e. either one or the other of the two select cables 42, 52 is pulled (the other one is loosened but does not transmit a pushing force).

The shift lever 2 is coupled by respective mechanical linkages to the shift pulley 4 and to the select pulley 14, respectively, which mechanical linkages will now be described with reference to Figs. 1 to 3.

The mechanical linkage for transferring the select movements comprises a select lever arm 9. The select lever arm 9 has a bore 9a for receiving a shaft (not shown) which is fixed with respect to the shifter assembly housing and around which the select lever arm 9 can rotate, wherein the axis of rotation is indicated by reference numeral 99.

The ball portion at the lower end of the shift lever 2 carries a select pin 8 extending therefrom and into an oblong aperture 9b of the select lever arm 9 in which the select pin 8 can slide. The aperture 9b and the select pin 8 are spaced apart from the rotational axis 99 of the select lever arm 9. Select movements of the shift lever 2 to the right hand side or to the left hand side cause an upward or downward movement, respectively, of the outer end of select pin 8. Since the select lever arm 9 is mounted to be rotational around axis 99 spaced apart from select pin 8 and oblong aperture 9b, moving select pin 8 upwards or downwards causes a rotation of select lever arm 9 around rotational axis 99. On the lower end of select lever arm 9 a select drive pin 10 is disposed which is received in an oblong aperture 15 (Fig. 3) of select pulley 14. In this manner a select movement of shift lever 2 is transferred via an upwards or downward movement of select pin 8 into a rotation of select lever arm 9 around its axis of rotation 99 which is accompanied by a pivotal movement of select drive pin 10 which pivotal movement includes a translational movement component which in turn causes a rotational movement of select pulley 14.
The mechanical linkage for shift movements is formed in a corresponding manner, as can be seen in Fig. 3. It is noted that the ball in the lower end portion of the shift lever 2 is received in a bearing, but only one of the bearing members being shown in Fig. 3 and none of the bearing components in Figs. 1 and 2. Shift movements of the shift lever 2 result in pivotal upward and downward movements of a shift pin 18. This shift pin 18 is received in an oblong aperture 19b of a shift lever arm 19. Spaced apart from oblong aperture 19b is a bore 19a for receiving a shaft (not shown) fixed in the housing. Around this shaft shift lever arm 19 is rotatable around rotational axis 199. Since shift pin 18 and oblong aperture 19b receiving shift pin 18 are displaced from the rotational axis 199 of shift lever arm 19 pivotal vertical upward and downward movements of shift pin 18 are translated into rotational movements of shift lever arm 19 around rotational axis 199. Rotational movements of shift lever arm 19 are accompanied by pivotal movements of shift pulley drive pin 20 mounted at the lower end of shift lever arm 19. This shift pulley drive pin 20 is received in oblong aperture 5 of shift pulley 4 and can slide therein. Rotational movements of the shift lever arm 19 thus result in rotational movements of shift pulley 4 around its vertical axis of rotation.

In the example shown in Figs. 1 to 3 select pulley 14 is disposed above shift pulley 4. In principle this relative positioning of shift and select pulley could also be reversed such that the shift pulley would be disposed on top of the select pulley.

In the example of Fig. 1 to 3 the upper select pulley 14 is not circular but has a cut out segment. This shape of the select pulley 14 provides for better access to the shift pulley 4 positioned below the select pulley 14. The select lever arm 19 is disposed such that it extends through the area of the cut out segment of the select pulley to an oblong aperture 5 formed in a protrusion on the outer circumference of shift pulley 4. If the roles of shift pulley and select pulley were reversed, i.e. the shift pulley would be disposed on top of the select pulley as indicated above, then the cut out segment would be formed in the shift pulley disposed on top of the select pulley, and the protrusion with the oblong aperture 5 would be formed on the shift pulley.

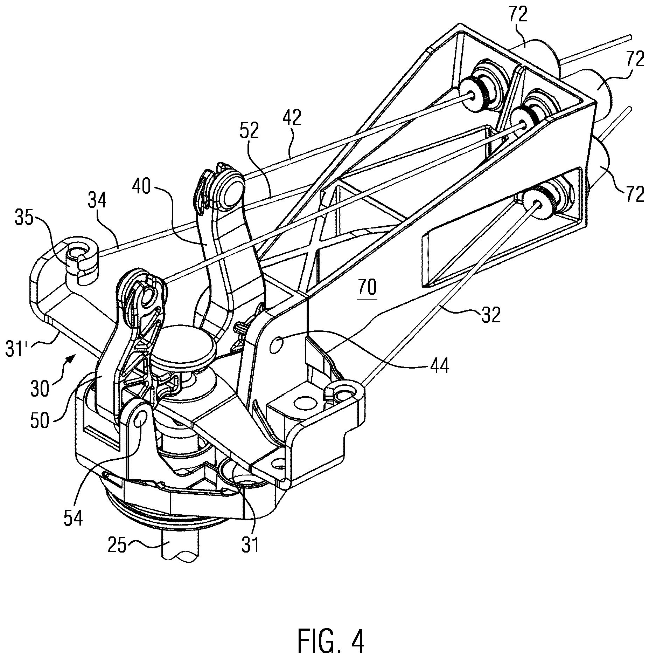

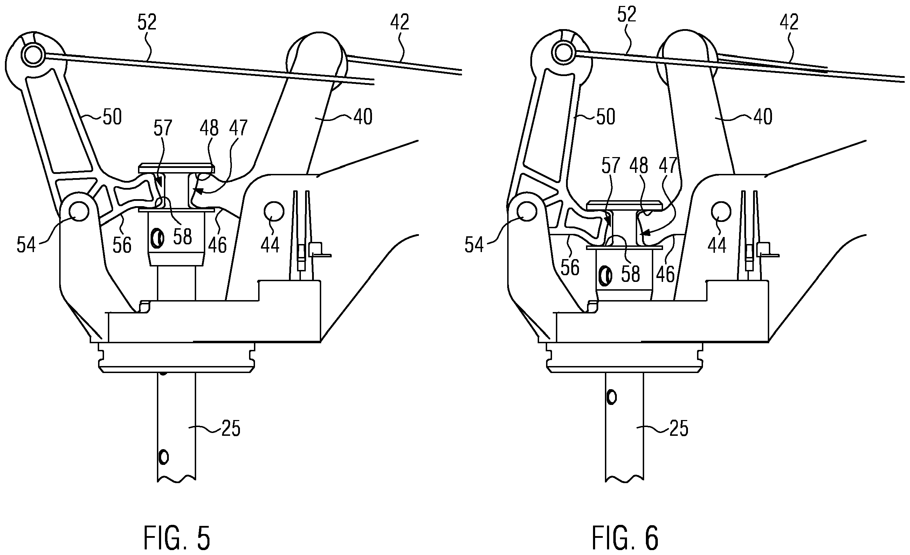

Fig. 4 shows a perspective view of the shift tower according to the present invention mounted at a gearbox. A shift shaft 25 projects from the housing (not shown) of the gearbox. A shift lever 30 is connected to the projecting end portion of the shift shaft 25, and extends generally perpendicular to the longitudinal axis of the shift shaft 25. The shift lever 30 has two opposite shift lever portions 31, 31' extending in opposite directions from the shift shaft. Each of the two opposite shift lever portions is provided with a cable connection at its end remote from the shift shaft 25 for connecting the shift cables 32, 34 with the cable connections to the shift lever 30. The cable connection comprises a cable end fitting 35 fixed to shift cable 34 and a complementary receiving opening on shift lever portion 31'. The other cable connections are of identical construction but do not have reference numerals in Fig. 4.
By selectively pulling one of the shift cables 32, 34 the shift shaft 25 is rotated around its longitudinal axis in a first rotational sense, and by pulling the other one of the select cables the shift shaft rotates in the opposite rotational sense. The other one of the select cables that is not pulled is getting longer due to the rotation of the shift pulley, and there is cable length available such that the shift cable not being pulled can follow the pivot movement of the shift lever 30.
Fig. 4 also shows two separate select levers 40, 50 which are mounted in pivot bearings 44, 54 opposite to each other and in a symmetric fashion with respect to the shift shaft 50 in between. The pivot bearings 44, 54 are formed on a common base component 70. The base component 70 is also provided with mounting openings in which end fittings 72 of the shift and select cables are mounted. The end fittings 72 are connected to the outer sleeves of the shift and select cables 32, 34, 42, and 52, which outer sleeves are in this manner fixated on the base component 70, whereas the inner cable cores are guided through the end fittings 72 and are slidable therein.
The design and operation of the shift tower will be further described with reference to Figs. 4 to 6. In Figs. 5 and 6 schematical side views of the select lever arrangement of the shift tower according to the present invention are shown in two different states of operation. The two select levers 40, 50 are arranged symmetrically with respect to the shift shaft 25 in between. The shift levers 40, 50 are identical components. However, the select levers 40, 50 are plastic components made by injection moulding, and they are formed with reinforcement ribs on one side and with a smooth surface on the opposite side. Therefore, select lever 40 is shown with the smooth surface, and select lever 50 with reinforcement ribs. The select levers 40, 50 are mounted with pivot bearings 44, 54 and are connected to the same base component 70 which in turn is connected to the housing of a gearbox. The select levers 40, 50 have the shape of an L, with the long leg of the L extending parallel to the longitudinal axis of the shift shaft 25 when the select levers 40, 50 are in the rest position. The short legs of the L extend as actuating arms 46, 56 towards the shift shaft and into engagement with axial engagement surfaces 48, 58 as will be explained further below.

In Fig. 5 select cable 42 has been pulled. As a result the select lever 40 has pivoted about its pivot bearing 44 such that its cable connection has been pivoted away from the longitudinal axis of the shift shaft 25. The actuating arm 46 of the select lever 40 has been pivoted upwards. By abutment against the axial engagement surface 48 the pivoting of the actuation arm 46 has shifted the shift shaft 25 in a first axial direction (upwards in the view of Fig. 5). The term axial engagement surface 48 is used herein to describe a surface that is arranged such that the actuation arm 46 can abut against it as a leverage point in order to cause an axial displacement of the shift shaft 25 in an axial direction.

During the shift operation which resulted in the shifted state of Fig. 5 the other select lever 50 has also been pivoted since its actuation arm 56 is in abutment against an axial engagement surface 58 so that the upwards movement of the shift shaft 25 caused the other select lever 50 to be pivoted such that its cable connection is pivoted away from the longitudinal axis of the shift shaft 25. Since pulling of the select cable 42, which led to the state of Fig. 5, was performed by rotating select pulley 14 more cable length is available for the other select cable 52 so that enough cable length for the select cable 52 is available to allow the select lever 50 to be pivoted away from the longitudinal axis of the shift shaft. This mechanism and how it depends on the angle of the select cables to the select levers when the select levers are in the rest position will be explained in more detail further below.

To perform a select operation in the opposite direction select pulley 14 is rotated in the opposite direction which leads to the operational state shown in Fig. 6 in which the shift shaft 25 has been displaced in axial direction in the opposite direction compared to Fig. 5, namely downwards in the view of Fig. 6. The rotation of select pulley 14 caused that select cable 52 has been pulled. Pulling of the select cable 52 caused in turn that select lever 50 has been pivoted about its pivot bearing 54 such that its cable connection has been pivoted towards the longitudinal axis of the shift shaft 25. The actuating arm 56 of the select lever engages axial engagement surface 58, and therefore, the pivoting of the actuation arm 56 of the select lever 50 is accompanied by a shift movement of the shift shaft 6 in its longitudinal direction (downwards in the view of Fig. 6).

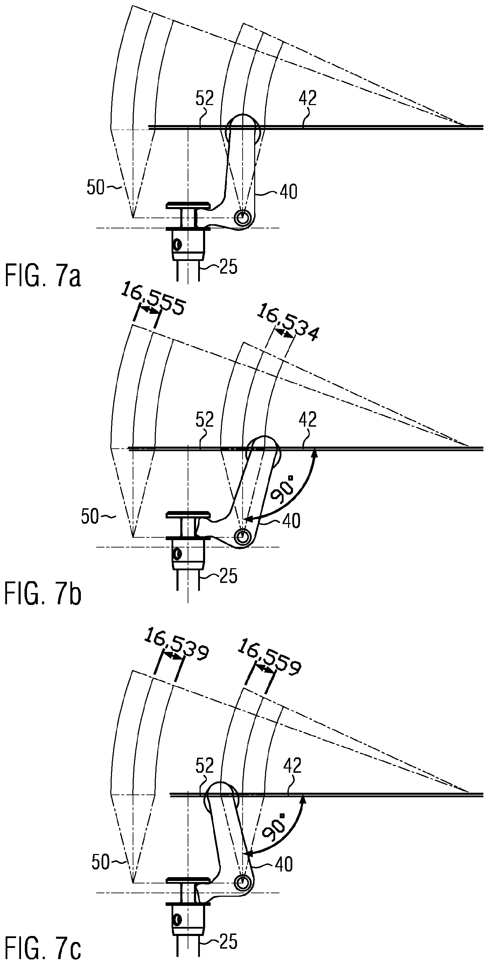

In the embodiment of Figs. 5 and 6 the actuation arms 46, 56 of the select levers 40, 50 extend into recesses 47, 57 on opposite sides of the shift shaft 25. However, in principle such recesses are not necessary, and presence of the axial engagement surfaces 48, 58 would be sufficient. In the embodiment shown in Figs. 5 and 6 the opposite recesses 47 and 57 are in fact part of a single recess that is circumferentially extending around the longitudinal axis of the shift shaft 25. It should be noted that the axial engagement surfaces 48 and 58 and the recesses 47 and 57 do not have to be part of the shift shaft 25 itself. It is sufficient if the engagement surfaces 48 and 58 are formed by components that are connected to the shift shaft 25 so that they can exert force in axial direction on the shift shaft 25. In principle, the recesses 47 and 57 and the axial engagement surfaces 48 and 58 could for example be formed by parts that are connected to the hub of the shift lever 30. In fact, in the embodiment shown in the Figures the projection in which the recesses 47, 57 are present is fixedly connected to the bushing which is mounted on the outer end of the actual shift shaft 25 and from which the shift lever portions of shift lever 30 extend.
We will now demonstrate the significance of the angle between the select cables 42, 52 and the line connecting the axis of the pivot bearing 44, 54 of the respective select lever 40, 50 and the cable connection of the respective shift lever 40, 50. In Fig. 7a a select lever arrangement of the shift tower according to the present invention is shown in which this angle is 90° when the select levers 40, 50 are in the rest position. This angle between the select cables 42, 52 and the select levers 40, 50 is determined by the location of the connection points where the cable end fittings are fixed with respect to the gearbox. At the cable end fittings the cable sleeves are fixed, and the actual select cable 42, 52 extend further to the cable connections at the select levers 40, 50. The cable connections can be disposed at the same component which carries the pivot bearings of the select levers 40, 50, and this component can be mounted as a hole at the gearbox.
As indicated in Fig. 7a the cable connections are located on the component such that the select cables 42, 52 extend perpendicular to the select levers 40, 50 when they are in the rest position. Fig. 7b, which represents a select lever arrangement of the shift tower according to the present invention, shows the situation when the select cable 42 has been pulled, as described before. Also indicated are the lengths by which select cable 42 has shortened, and select cable 52 became more elongated. The same information is shown in Fig. 7c, which represents a select lever arrangement of the shift tower according to the present invention, in which select cable 52 has been pulled to perform a downward select movement of the shift shaft.
As can be seen in Fig. 7b the length of the select cable 42 has been reduced by 16.534 mm when the select cable 42 has been pulled, whereas select cable 52 needs an extra length of 16.555 mm. Thus, there is a discrepancy of 0.02 mm. Since the select cable is a closed loop arrangement such extra length of 0.02 mm can only be obtained by stretching select cable 52.

However, such stretching of the cables is disadvantageous since this requires extra force for performing the operation. The same can be seen in Fig. 7c, in which select cable 52 has been pulled to reduce its length by 16.539 mm, whereas select cable 42 needs 16.559 mm more cable length to reach this state. Again, the 0.02 mm more needed for select cable 42 have to be obtained by stretching select cable 42.

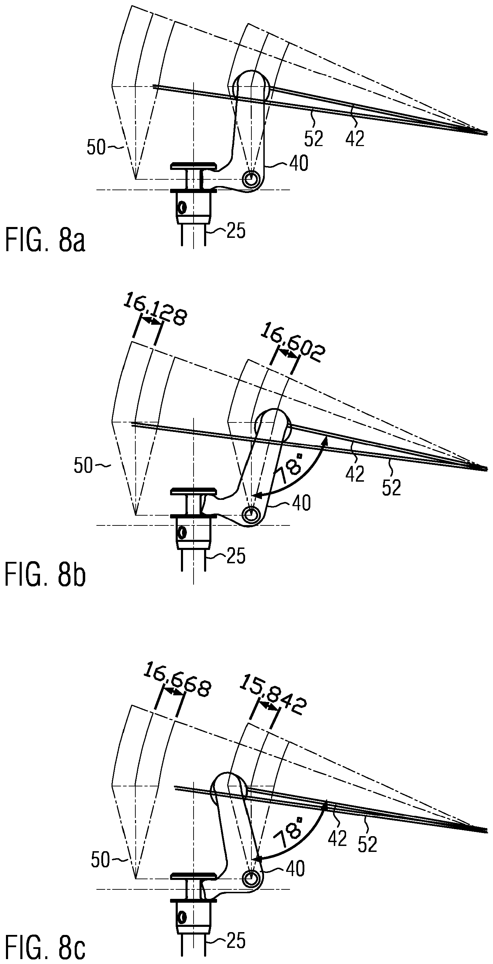

Figs. 8a to 8c show a modified select lever arrangement of the shift tower according to the present invention in which the cable end fittings are mounted at a different location with respect to the select levers. Here the location of the cable end fittings of the select cables 42, 52 has been chosen such that the angle between the select cable 42 and the line connecting the pivot bearing and the cable connection of select lever 40 is 78° in the rest position of the select levers. In this geometrical configuration the behaviour of shortening one of the select cables compared to the additional need for extra cable length for the other select cable is more favourable. As can be seen in Fig. 8b select cable 42 has been pulled so that 16.602 mm cable lengths are reduced for select cable 42. On the other hand select cable 52 only needs 16.128 mm extra cable length so that there is an excess of cable length which results in a slack in select cable 52. The same excess can be observed in the opposite operation leading to the state shown in Fig. 8c.
A slack in the select cable that is not pulled is preferred since it is ensured in this manner that now cable needs to be stretched to obtain the desired configuration. This ensures that no force is needed for stretching any cable.

## Claims

1. A shift tower for a pull-pull gearshift assembly for a gearbox, comprising:
a shift shaft (25),
two shift cables (32, 34),
two select cables (42, 52),
a shift lever (30) adapted to be connected to the shift shaft (25) of the gearbox such that two shift lever portions extend in opposite directions from the shift shaft in a plane perpendicular to the longitudinal axis of the shift shaft, each shift lever portion including a cable connection at an end portion at a distance to the longitudinal axis of the shift shaft for connecting to one of the two shift cables (32, 34),
a select lever (40, 50) including a pivot bearing (44, 54) adapted to be mounted at the gearbox in the vicinity of the shift shaft such that the pivot axis extends in a plane perpendicular to the longitudinal axis of the shift shaft, and such that an actuating arm connected to the select lever extends towards the shift shaft and into engagement with axial engagement surfaces (48, 58) for engagement with the shift shaft in axial direction thereof and for longitudinal displacement of the shift shaft (25), wherein the axial engagement surfaces are connected to the shift shaft, the select lever having two cable connections, each for connecting to one of the two select cables (42, 52),
**characterized in that** the select lever comprises two separate select levers (40, 50) and two pivot bearings (44, 54), wherein each separate select lever (40, 50) is mounted in one of these pivot bearings (44, 54), which pivot bearings (44, 54) are adapted to be mounted diametrically opposite to each other with respect to the shift shaft (25) disposed in a central location in between, each separate select lever having a cable connection spaced apart from its pivot bearing in the same direction with respect to the longitudinal axis of the shift shaft for connecting to one of the two select cables (42, 52), each separate select lever comprising such an actuating arm connected to the select lever to extend towards the shift shaft and into engagement with axial engagement surfaces (48, 58) for engagement with the shift shaft in axial direction thereof and for longitudinal displacement of the shift shaft (25), wherein the axial engagement surfaces are connected to the shift shaft on opposite sides thereof, such that pulling on one of the select cables (52) pivots one of the separate select levers (50) with its cable connection towards the shift shaft (25) which is transmitted by the connected actuating arm (56) acting on the associated engagement surface (58) to cause a longitudinal displacement of the shift shaft in a first direction, and pulling of the other select cable (42) pivots the other of the separate select levers (40) with its cable connection away from the shift shaft (25) which is transmitted by the connected actuating arm (46) acting on the associated engagement surface (48) to cause a longitudinal displacement of the shift shaft in a second direction opposite to the first direction.

2. The shift tower according to claim 1, **characterized in that** the axial engagement surfaces (48, 58) on opposite sides of the shift shaft are formed by two recesses (47, 57) formed on opposite sides in an outer wall of a component connected to the shift shaft (25).

3. The shift tower according to claim 1 or 2, **characterized in that** both separate select levers (40, 50) are identical components which are disposed symmetrically to a centre point located on the longitudinal axis of the shift shaft (25) .

4. The shift tower according to any of the preceding claims 2, or 3 when dependent on claim 2, **characterized in that** the recesses (47, 57) connected to the shift shaft for receiving the actuating arms of the separate select levers are formed by a circumferential groove in the outer wall of the component coaxially projecting from the end of the shift shaft (25).

5. The shift tower according to any of the preceding claims, **characterized in that** for each separate select lever (40, 50) a line connecting the pivot axis of the pivot bearing (44, 54) and the cable connection is, when the select levers (40, 50) are in rest position with none of the select cables being pulled, extending parallel to the longitudinal axis of the shift shaft.

6. The shift tower according to claim 5, **characterized in that** the pivot bearings (44, 54) are provided on a common base component (70) of the shift tower which is provided with mounting openings, wherein the shift and select cables (32, 34, 42, 52) are provided with outer sleeves which are connected to end fittings (72), and with inner cores which are guided through the end fittings (72) and are slidable therein, and **in that** the end fittings (72) are mounted in the mounting openings of the base component (70) to attach the outer sleeves of the select cables (42, 52) to the shift tower, wherein the mounting openings are located such that an angle between each select cable (42, 52) and a line connecting the pivot bearing (44, 54) and the cable connection of the respective select lever is less than 90° when the select levers (40, 50) are in rest position with none of the select cables (42, 52) being pulled.

7. The shift tower according to claim 6, **characterized in that** the angle between each select cable (42, 52) and the line connecting the pivot bearing (44, 54) and the cable connection of the respective select lever is less than 85° when the select levers (40, 50) are in rest position with none of the select cables (42, 52) being pulled.

8. The shift tower according to any of the preceding claims, **characterized in that** each of the cable connections of the separate select levers (40, 50) comprises a cylindrical opening at an end of the respective select lever remote from the pivot bearing (44, 54) to hold a complementary shaped cable end fitting fixed to the cable end of the associated one of the select cables (42, 52).

## Patentansprüche

1. Schaltdom für eine Zug-Zug-Gangschaltanordnung für ein Getriebe mit:
einer Schaltwelle (25),
zwei Schaltkabeln (32, 34),
zwei Auswahlkabeln (42, 52),
einem Schalthebel (30), der dazu ausgestaltet ist, mit der Schaltwelle (25) des Getriebes so verbunden zu werden, dass zwei Schalthebelbereiche in entgegengesetzte Richtungen von der Schaltwelle in einer Ebene senkrecht zu der Längsachse der Schaltwelle abstehen, wobei jeder Schalthebelbereich eine Kabelverbindung an einem Endbereich mit Abstand zur Längsachse der Schaltwelle zur Verbindung mit einem der beiden Schaltkabel (32, 34) aufweist,
einem Auswahlhebel (40, 50) einschließlich eines Schwenklagers (44, 54), das dazu ausgestaltet ist, an dem Getriebe in der Nähe der Schaltwelle montiert zu werden, so dass die Schwenkachse in einer Ebene senkrecht zur Längsachse der Schaltwelle verläuft und so dass ein mit dem Auswahlhebel verbundener Betätigungsarm zur Schaltwelle hin verläuft und in Eingriff mit Axialeingriffsoberflächen (48, 58) für den Eingriff mit der Schaltwelle in deren axialer Richtung und für die Längsverschiebung der Schaltwelle (25) steht, wobei die Axialeingriffsoberflächen mit der Schaltwelle verbunden sind, wobei der Auswahlhebel zwei Kabelverbindungen aufweist, von denen jede zur Verbindung mit einem der zwei Auswahlkabel (42, 52) dient,
**dadurch gekennzeichnet, dass** der Auswahlhebel zwei separate Auswahlhebel (40, 50) und zwei Schwenklager (44, 54) aufweist, wobei jeder separate Auswahlhebel (40, 50) in einem dieser Schwenklager (44, 54) gelagert ist, wobei die Schwenklager (44, 54) dazu ausgestaltet sind, um diametral gegenüberliegend zueinander in Bezug auf die Schaltwelle (25) montiert zu werden, die an einem zentralen Ort dazwischen angeordnet ist, wobei jeder separate Auswahlhebel eine Kabelverbindung auf Abstand zu seinem Schwenklager in dergleichen Richtung in Bezug auf die Längsachse der Schaltwelle zur Verbindung mit einem der zwei Auswahlkabel (42, 52) aufweist, wobei jeder separate Auswahlhebel einen solchen Betätigungsarm verbunden mit dem Auswahlhebel aufweist, um zu der Schaltwelle hin und in Eingriff mit axialen Eingriffsoberflächen (48, 58) zum Eingriff mit der Schaltwelle in deren axiale Richtung und zur Längsverschiebung der Schaltwelle (25) zu verlaufen, wobei die Axialeingriffsoberflächen mit der Schaltwelle auf gegenüberliegenden Seiten davon verbunden sind, so dass Zug an einem der Auswahlkabel (52) einen der separaten Auswahlhebel (50) mit seiner Kabelverbindung zu der Schaltwelle (25) hin schwenkt, was durch den verbundenen Betätigungsarm (56), der auf die zugehörigen Eingriffsoberflächen (58) einwirkt, übertragen wird, um eine Längsverschiebung der Schaltwelle in eine erste Richtung zu bewirken, und Zug des anderen Auswahlkabels (42) den anderen der separaten Auswahlhebel (40) mit seiner Kabelverbindung weg von der Schaltwelle (25) schwenkt, was von dem verbundenen Betätigungsarm (46), der auf die zugehörige Eingriffsoberfläche (48) einwirkt, übertragen wird, um eine Längsverschiebung der Schaltwelle in eine zweite Richtung entgegengesetzt zu der ersten Richtung zu bewirken.

2. Schaltdom nach Anspruch 1, **dadurch gekennzeichnet, dass** die Axialeingriffsoberflächen (48, 58) auf gegenüberliegenden Seiten der Schaltwelle durch zwei Ausnehmungen (47, 57) gebildet werden, die auf gegenüberliegenden Seiten in einer Außenwand einer mit der Schaltwelle (25) verbundenen Komponente gebildet sind.

3. Schaltdom nach Anspruch 1 oder 2, **dadurch gekennzeichnet, dass** die beiden separaten Auswahlhebel (40, 50) identische Komponenten sind, die symmetrisch zu einem auf der Längsachse der Schaltwelle (25) liegenden Mittelpunkt angeordnet sind.

4. Schaltdom nach einem der vorhergehenden Ansprüche 2 oder 3, wenn abhängig von Anspruch 2, **dadurch gekennzeichnet, dass** die zur Aufnahme der Betätigungsarme der separaten Auswahlhebel mit der Schaltwelle verbundenen Ausnehmungen (47, 57) durch eine umlaufende Nut in der Außenwand der Komponente gebildet sind, die koaxial von dem Ende der Schaltwelle (25) vorsteht.

5. Schaltdom nach einem der vorhergehenden Ansprüche, **dadurch gekennzeichnet, dass** für jeden der separaten Auswahlhebel (40, 50) eine die Schwenkachse des Schwenklagers (44, 54) und die Kabelverbindung verbindende Gerade, wenn die Auswahlhebel (40, 50) in Ruhestellung sind und keines der Auswahlkabel gezogen wird, parallel zur Längsachse des Schalthebels verläuft.

6. Schaltdom nach Anspruch 5, **dadurch gekennzeichnet, dass** die Schwenklager (44, 54) an einer gemeinsamen Basiskomponente (70) des Schaltdoms angeordnet sind, die mit Montageöffnungen versehen ist, wobei die Schalt- und Auswahlkabel (32, 34, 42, 52) mit äußeren Hüllen, die mit Endstücken (72) verbunden sind, und mit inneren Kabelseelen versehen sind, die durch die Endstücke (72) und darin gleitfähig hindurchgeführt sind, und dass die Endstücke (72) in den Montageöffnungen der Basiskomponente (70) angebracht sind, um die äußeren Umhüllungen der Auswahlkabel (42, 52) mit dem Schaltdom zu verbinden, wobei die Montageöffnungen so angeordnet sind, dass ein Winkel zwischen jedem Auswahlkabel (42, 52) und einer das Schwenklager (44, 54) und die Kabelverbindung des jeweiligen Auswahlhebels verbindenden Geraden weniger als 90° ist, wenn die Auswahlhebel (40, 50) in Ruhestellung sind, wenn keines der Auswahlkabel (42, 52) gezogen wird.

7. Schaltdom nach Anspruch 6, **dadurch gekennzeichnet, dass** der Winkel zwischen jedem Auswahlkabel (42, 52) und der das Schwenklager (44, 54) und die Kabelverbindung des jeweiligen Auswahlhebels verbindenden Geraden weniger als 85° beträgt, wenn die Auswahlhebel (40, 50) in Ruhestellung sind, wenn keines der Auswahlkabel (42, 52) gezogen wird.

8. Schaltdom nach einem der vorhergehenden Ansprüche, **dadurch gekennzeichnet, dass** die Kabelverbindungen der separaten Auswahlhebel (40, 50) eine zylindrische Öffnung an einem entfernt von dem Schwenklager (44, 54) liegenden Ende des jeweiligen Auswahlhebels aufweisen, um ein komplementär geformtes Kabelendstück zu halten, das an dem Kabelende des zugehörigen Auswahlkabels (42, 52) fixiert ist.

## Revendications

1. Tour de changement de vitesses pour un ensemble de changement de vitesses traction-traction d'une boîte de vitesses, comprenant :
un arbre de changement de vitesses (25),
deux câbles de changement de vitesses (32, 34),
deux câbles de sélection (42, 52),
un levier de changement de vitesses (30) adapté pour être relié à l'arbre de changement de vitesses (25) de la boîte de vitesses de telle sorte que deux parties de levier de changement de vitesses s'étendent dans des directions opposées à partir de l'arbre de changement de vitesses dans un plan perpendiculaire à l'axe longitudinal de l'arbre de changement de vitesses, chaque partie de levier de changement de vitesses incluant une connexion de câble sur une partie d'extrémité à distance de l'axe longitudinal de l'arbre de changement de vitesses pour la connexion à l'un des deux câbles de changement de vitesse (32, 34),
un levier de sélection (40, 50) incluant une crapaudine (44, 54) adaptée pour être montée au niveau de la boîte de vitesses au voisinage de l'arbre de changement de vitesses de telle sorte que l'axe de pivotement s'étend dans un plan perpendiculaire à l'axe longitudinal de l'arbre de changement de vitesses, et de telle sorte qu'un bras de commande relié au levier de sélection s'étend vers l'arbre de changement de vitesses et en prise avec des surfaces de mise en prise axiales (48, 58) pour la mise en prise avec l'arbre de changement de vitesses dans sa direction axiale et pour le déplacement longitudinal de l'arbre de changement de vitesses (25), dans laquelle les surfaces de mise en prise axiales sont reliées à l'arbre de changement de vitesses, le levier de sélection ayant deux connexions de câble, chacune pour la connexion à l'un des deux câbles de sélection (42, 52),
**caractérisée en ce que** le levier de sélection comprend deux leviers de sélection séparés (40, 50) et deux crapaudines (44, 54), dans laquelle chaque levier de sélection séparé (40, 50) est monté dans l'une de ces crapaudines (44, 54), lesquelles crapaudines (44, 54) sont adaptées pour être fixées de façon diamétralement opposées l'une à l'autre par rapport à l'arbre de changement de vitesses (25) disposé dans un emplacement central entre elles, chaque levier de sélection séparé ayant une connexion de câble éloignée de sa crapaudine dans la même direction par rapport à l'axe longitudinal de l'arbre de changement de vitesses pour la connexion à l'un des deux câbles de sélection (42, 52), chaque levier de sélection séparé comprenant un tel arbre de commande relié au levier de sélection de sorte à s'étendre vers l'arbre de changement de vitesses et en prise avec les surfaces de mise en prise axiales (48, 58) pour la mise en prise avec l'arbre de changement de vitesses dans sa direction axiale et pour le déplacement longitudinal de l'arbre de changement de vitesses (25), dans laquelle les surfaces de mise en prise axiales sont reliées à l'arbre de changement de vitesses sur ses côtés opposés, de telle sorte que la traction sur l'un des câbles de sélection (52) fait pivoter l'un des leviers de sélection séparés (50) avec sa connexion de câble vers l'arbre de changement de vitesses (25) qui est transmise par le bras de commande relié (56) agissant sur la surface de mise en prise associée (58) pour provoquer un déplacement longitudinal de l'arbre de changement de vitesses dans une première direction, et que la traction de l'autre câble de sélection (42) fait pivoter l'autre des leviers de sélection séparés (40) avec sa connexion de câble éloignée de l'arbre de changement de vitesses (25) qui est transmise par le bras de commande relié (46) agissant sur la surface de mise en prise associée (48) pour provoquer un déplacement longitudinal de l'arbre de changement de vitesses dans une second direction opposée à la première direction.

2. Tour de changement de vitesses selon la revendication 1, **caractérisée en ce que** les surfaces de mise en prise axiales (48, 58) sur les côtés opposés de l'arbre de changement de vitesses sont formées par deux évidements (47, 57) formés sur les côtés opposés dans une paroi externe d'un élément relié à l'arbre de changement de vitesses (25).

3. Tour de changement de vitesses selon la revendication 1 ou 2, **caractérisée en ce que** les deux leviers de sélection séparés (40, 50) sont des éléments identiques qui sont disposés de manière symétrique à un point central situé sur l'axe longitudinal de l'arbre de changement de vitesses (25).

4. Tour de changement de vitesses selon l'une quelconque des revendications précédentes 2 ou 3 lorsqu'elle dépend de la revendication 2, **caractérisée en ce que** les évidements (47, 57) reliés à l'arbre de changement de vitesses pour recevoir les bras de commande des leviers de sélection séparés sont formés par une rainure circonférentielle dans la paroi externe de l'élément faisant saillie coaxialement de l'extrémité de l'arbre de changement de vitesses (25).

5. Tour de changement de vitesses selon l'une quelconque des revendications précédentes, **caractérisée en ce que** pour chaque levier de sélection séparé (40, 50) une ligne reliant l'axe de pivotement de la crapaudine (44, 54) et la connexion de câble s'étend, lorsque les leviers de sélection (40, 50) ne sont en position de repos avec aucun des câbles de sélection tirés, parallèlement à l'axe longitudinal de l'arbre de changement de vitesses.

6. Tour de changement de vitesses selon la revendication 5, **caractérisée en ce que** les crapaudines (44, 54) sont prévues sur un élément de base commun (70) de la tour de changement de vitesses qui est doté d'ouvertures de fixation, dans laquelle les câbles de changement de vitesses et de sélection (32, 34, 42, 52) sont dotés de manchons externes qui sont reliés à des embouts (72), et d'âmes internes qui sont guidées à travers les embouts (72) et peuvent coulisser à l'intérieur de ceux-ci, et **en ce que** les embouts (72) sont fixés dans les ouvertures de fixation de l'élément de base (70) pour attacher les manchons externes des câbles de sélection (42, 52) à la tour de changement de vitesses, dans laquelle les ouvertures de fixation sont placées de telle sorte qu'un angle entre chaque câble de sélection (42, 52) et une ligne reliant la crapaudine (44, 54) et la connexion de câble du levier de sélection respectif est inférieur à 90° lorsque les leviers de sélection (40, 50) ne sont en position de repos avec aucun des câbles de sélection (42, 52) tirés.

7. Tour de changement de vitesses selon la revendication 6, **caractérisée en ce que** l'angle entre chaque câble de sélection (42, 52) et la ligne reliant la crapaudine (44, 54) et la connexion de câble du levier de sélection respectif est inférieur à 85° lorsque les leviers de sélection (40, 50) ne sont en position de repos avec aucun des câbles de sélection (42, 52) tirés.

8. Tour de changement de vitesses selon l'une quelconque des revendications précédentes, **caractérisée en ce que** chacun des connexions de câble des leviers de sélection séparés (40, 50) comprend une ouverture cylindrique à une extrémité du levier de sélection respectif distante de la crapaudine (44, 54) pour maintenir un embout de câble de forme complémentaire fixé à l'extrémité de câble du câble associé parmi les câbles de sélection (42, 52).
